**Europäisches Patentamt**

**European Patent Office**

**Office européen des brevets**

(19)

(11) Veröffentlichungsnummer: **0 057 841**
**B1**

# EUROPÄISCHE PATENTSCHRIFT

(12)

(45) Veröffentlichungstag der Patentschrift:
03.07.85

(51) Int. Cl.⁴: **H 01 M 2/16,** H 01 M 2/14

(21) Anmeldenummer: **82100433.0**

(22) Anmeldetag: **22.01.82**

(54) **Verfahren zur Herstellung von porösen Körpern und deren Verwendung.**

(30) Priorität: **28.01.81 DE 3102735**

(43) Veröffentlichungstag der Anmeldung:
**18.08.82 Patentblatt 82/33**

(45) Bekanntmachung des Hinweises auf die Patenterteilung:
**03.07.85 Patentblatt 85/27**

(84) Benannte Vertragsstaaten:
**AT BE CH FR GB IT LI LU NL SE**

(56) Entgegenhaltungen:
**WO - A - 79/00066**
**DE - A - 2 924 239**
**FR - A - 2 263 609**
**FR - A - 2 317 777**
**US - A - 3 749 604**

(73) Patentinhaber: **Grace GmbH, Erlengang 31,**
**D-2000 Norderstedt (DE)**

(72) Erfinder: **Stöhr, Helmut Ludwig, 1 Rue Ignace Spiess,**
**F-67600 Sélestat (FR)**

(74) Vertreter: **UEXKÜLL & STOLBERG Patentanwälte,**
**Beselerstrasse 4, D-2000 Hamburg 52 (DE)**

## Beschreibung

Die Erfindung betrifft ein Verfahren zur Herstellung von in den Poren bindemittelfreien, porösen Körpern mit in weiten Grenzen einstellbaren Luftwiderstandswerten als Mass für die Porengrösse, insbesondere porösen Körpern geringer Luftdurchlässigkeit durch Agglomerierung von anorganischen Füllstoffen in einer grobporigen Struktur von vorgeformten Dimensionen. Die nach dem erfindungsgemässen Verfahren hergestellten porösen Körper eignen sich unter anderm insbesondere als Batterieseparatoren und Filtermatten oder -filze verschiedener Art.

Es ist bekannt, Füllstoffe bzw. Pulver geringer Korngrösse auf die Oberfläche von porösen Substraten aufzutragen und mit Hilfe von Bindemitteln, kondensierbaren Harzen oder Sinterung festzulegen, um eine Schicht geringerer Porengrösse, die teilweise in der Substratschicht verankert ist, zu erhalten und damit einen Körper zu schaffen, der geringere Porengrösse aufweist als dies mit dem Herstellungsverfahren des Substrates möglich ist. Der Nachteil dieses Verfahrens ist, dass bei hohen Füllstoffanteilen bzw. bei Sinterung die Haftung des Materials in sich bzw. auf dem Substrat unvollkommen ist und damit mechanisch wenig belastbar ist. Dies kommt vor allem als Rüttel- bzw. Abriebempfindlichkeit zum Ausdruck. Bei Verwendung von hohen Bindemittelanteilen hingegen läuft man leicht Gefahr, durch lokal zu hohe Konzentrationen vollkommen dichte Stellen zu schaffen, die dem Anwendungszweck entgegenstehen.

Es ist weiterhin bekannt, Füllstoffe mit kondensierbaren Harzen zu mischen und ein vorhandenes grobporiges Substat damit zu füllen. Beim Auskondensieren dieses Gebildes erfolgt dann Verankerung des Füllstoffes mit dem Substrat durch die beide verbindende Harzschicht. Nachteile dieses Verfahrens sind die geringe Aufnahmefähigkeit von handelsüblichen Harzen für Füllstoffe aufgrund der eintretenden Viskositätserhöhungen bei höheren Konzentrationen, die teilweise Blockierung der Oberfläche der Füllstoffe durch Harzfilme und die Veränderung, die das Substrat durch Einbringen eines zu kondensierenden Harzes erleidet. So ist es beispielsweise nur unter schwierigen Bedingungen möglich, ein niedrigschmelzendes Polymersubstrat mit einem nur bei höherer Temperatur mit zufriedenstellender Geschwindigkeit kondensierenden Harz zu kombinieren, ohne dass das niedrigschmelzende Polymer seine Form verliert.

Die Erfindung ist in den Ansprüchen wiedergegeben. Sie betrifft ein Verfahren zur Herstellung von in den Poren bindemittelfreien, porösen Körpern mit in weiten Grenzen einstellbaren Luftwiderstandswerten als Mass für die Porengrösse der in den Patentansprüchen gekennzeichneten Art.

Luftwiderstandswerte im Sinne dieser Patentanmeldung sind mit Hilfe geeigneter Messgeräte bestimmte Zeiten, die benötigt werden, um eine bestimmte Menge Luft unter festgelegtem Druck durch einen Probenkörper bestimmter Grösse hindurchzudrücken. Je kleiner dabei die Poren im Probenkörper, desto längere Zeiten werden gemessen. Die in der Beschreibung und den Patentansprüchen angegebenen Luftwiderstandswerte beziehen sich auf eine Luftmenge von 300 ml, $1,2 \times 10^3$ Pa (124,2 mm Wassersäule) Überdruck und eine Messfläche von 6,45 cm². Es wurde ein Gurley-Densometer, Typ 4110 verwendet, bei dem die angegebene Luftmenge mittels eines in einem Aussenzylinder geführten Innenzylinders mit einem Gewicht von 567 g durch den Probenkörper gedrückt wird.

Beim erfindungsgemässen Verfahren wird ein gegebenes Substrat, dessen Form und Porenstruktur nach irgendeinem anderen Verfahren festgelegt worden ist, mit einer bindemittelfreien Dispersion von mikronisierten Füllstoffen mit einer Teilchengrösse von höchstens $5 \times 10^{-3}$ mm in einer flüssigen Phase dergestalt behandelt, dass der Füllstoff in die grobporige Struktur eingebracht wird und beim nachfolgenden Entfernen der flüssigen Phase in den Poren agglomeriert, so dass durch die grobporige Struktur des Substrats der agglomerierte Füllstoff in einer Vielzahl von «Käfigen» zurückgehalten wird. Es resultiert daraus eine im wesentlichen mechanische Zurückhaltung des Füllstoffes, so dass auf ein Bindemittel chemischer Natur verzichtet werden kann. Dementsprechend bedeutet der Begriff «bindemittelfrei» im Rahmen der Erfindung, dass der Füllstoff entgegen dem vorbekannten Stand der Technik nicht durch ein chemisches Bindemittel an das Substrat gebunden ist.

Die nach dem erfindungsgemässen Verfahren zu behandelnden Substrate können diverser Natur sein und sehr verschiedene Porenformen und -grössen aufweisen. Der Grund dafür ist darin zu sehen, dass das sich bildende Füllstoffagglomerat sich der Porenform des Substrates anpasst. In Frage kommende Substrate sind beispielsweise Cellulosefaserwirrvliese, Vliese aus synthetischen Fasern, aus mineralischen Fasern oder Mischungen der genannten Fasern, gesinterte Formkörper aus Metall, Kunststoffen, Glas oder anderen Materialien, durch Vliesbildungs-, Sinterungs- oder Extraktionsverfahren gewonnene porenhaltige Körper usw. Es ist leicht ersichtlich, dass diese Aufzählung nicht vollständig ist, sondern nur Beispiele gibt. Eine untere Begrenzung der Porengrösse ergibt sich aus der minimalen Grösse der in der Dispersion vorhandenen Füllstoffteilchen, die im Bereich von ca. $10^{-6}$ bis $10^{-5}$ mm für Füllstoffe auf Kieselsäurebasis anzusetzen ist. Durch steigenden Aufwand in der Herstellung der Dispersion und fallende Ausbeute bezüglich der Beladung der Substrate (g Füllstoff/m² Substrat) ergibt sich jedoch eine praktikable Grenze von ca. $10^{-3}$ mm Porengrösse minimal für das Substrat.

Geeignete Füllstoffe für das erfindungsgemässe Verfahren sind alle in flüssigen Medien dispergierbaren und beim Entfernen des flüssigen Mediums agglomerierenden Stoffe, die mit dem jeweiligen Einsatzzweck des Endproduktes vereinbar sind. Im wesentlichen kommen in Frage die anorganischen Füllstoffe, wie z.B. Calciumcarbonate, Kaoline, Siliciumdioxide, Talkum, Diatomeenerde, usw. Das Aufbrechen der in der Lieferform vorliegenden Sekundärteilchen erfolgt je nach Füllstofftyp mit Rührgeräten verschiedener Bauart. Insbesondere kommen dafür in Frage Intensivrührer hoher Drehgeschwindigkeit mit sehr hohen Scherkräften, Turbinenrührer, Turbinenhomogenisatoren usw.; für die im folgenden beschriebenen Versuche wurde ein «Ultraturrax» benutzt. Bei diesem Gerät werden die Partikel durch die zwischen einem feststehenden Stator und einem mit hoher Geschwindigkeit drehenden Rotor auftretenden Scherkräfte zerkleinert.

Bei manchen Füllstoffen, die in Dispersion geliefert werden, erübrigt sich die mechanische Behandlung, da die Teilchen bereits mikronisiert vorliegen, so dass direkt mit den Dispersionen gearbeitet werden kann.

Wie bereits erwähnt, liegt die minimale Grösse der in der Dispersion vorhandenen Füllstoffteilchen im Bereich von ca. $10^{-6}$ bis $10^{-5}$ mm. Bei üblichen im Handel erhältlichen Dispersionen von beispielsweise durch Flammenhydrolyse gewonnener Kieselsäure oder auch gefällter Kieselsäure liegt die Teilchengrösse im Bereich von $10^{-5}$ bis $10^{-4}$ mm. Füllstoffdispersionen mit Teilchengrössen in diesem Bereich eignen sich besonders gut für das erfindungsgemässe Verfahren. Ganz allgemein ist festzustellen, dass auch Füllstoffe mit einer Teilchengrösse im Bereich von $10^{-3}$ mm geeignet sind, dass aber die Teilchengrösse nicht über $5 \times 10^{-3}$ mm hinausgehen sollte.

Die erfindungsgemäss verwendeten Füllstoffe mit der angegebenen geringen Teilchengrösse (Primärteilchen) besitzen die Fähigkeit zu grösseren Aggregaten zu agglomerieren. Die Agglomerate (Sekundärteilchen) können eine Grösse von $5 \times 10^{-5}$ bis etwa $10^{-1}$ mm aufweisen. Die Agglomeratgrösse der bevorzugt verwendeten Füllstoffe liegt bei $5 \times 10^{-4}$ bis $10^{-2}$ mm. Bei diesen Werten für die Agglomeratgrösse handelt es sich um von den Herstellern angegebene Werte, die von den tatsächlichen Agglomeratgrössen in den erfindungsgemäss hergestellten porösen Körpern abweichen können, da die Agglomeratgrösse in den erfindungsgemässen porösen Körpern praktisch nicht bestimmbar ist.

Die Füllstoffe werden mit dem Dispersionsmittel, aus Kostengründen im allgemeinen Wasser, in je nach Füllstofftyp vorzugsweise 1- bis 40%igen Konzentrationen vermischt und im Ansatz- oder im kontinuierlichen Betrieb für eine gewisse, durch Versuche zu bestimmende Zeit, dispergiert. Das Füllen der Substrate erfolgt dann nach bekannten Verfahren der Technik, zum Beispiel Filtrationsverfahren, Schwemmwalzen, Tauchverfahren, Aufspülung, Aufsprühen, Auflegen auf die Oberfläche der Dispersion, usw. Abhängig von der Art des angewandten Verfahrens, des Füllstoffes, seiner Korngrösse und der Porengrösse und Benetzbarkeit des Substrates erfolgt ein mehr oder weniger rasches Eindringen der Dispersion in die Poren. Das Eindringen darf jedoch nur so schnell erfolgen, dass die in den Poren befindliche Luft entweichen kann.

Die Entfernung des Dispersionsmittels kann nach diversen, dem Stand der Technik entsprechenden Verfahren erfolgen. Insbesondere kommen dafür beispielsweise in Frage Trocknungsverfahren durch Wärmezufuhr, durch Verdampfung in bewegten Gasströmen, durch Verdampfung im Vakuum usw. Die dabei zur Anwendung kommenden Temperaturen, Unterdrucke, Gasgeschwindigkeiten usw. hängen dabei vom angewendeten Dispersionsmittel und dem Füllstoff ab.

Neben anderen Anwendungsgebieten eignen sich derartige gefüllte Substrate als Batterieseparatoren, insbesondere für Blei-Säure-Akkumulatoren. Die herkömmlicherweise verwendeten Zellulose- oder Sinter-PVC-Separatoren oder auch neuere aus synthetischen Fasern hergestellte Wirrvliese stellen den zurzeit akzeptierten Kompromiss aus Leistungsfähigkeit (Kaltstartverhalten), Lebensdauer und Kosten dar. Durch die in diesen Separatoren vorherrschenden Porengrössen von ca. $5 \times 10^{-3}$ bis $5 \times 10^{-2}$ mm wird die Lebensdauer durch Durchwachsungen (Kurzschlüsse) begrenzt. Um eine akzeptable Lebensdauer zu garantieren, müssen die Separatoren eine gewisse, im übrigen unerwünschte Dicke besitzen. Die erfindungsgemäss hergestellten Separatoren erlauben demgegenüber eine Verbesserung der Lebensdauer bei gleicher Substratdicke bzw. eine Beibehaltung der Lebensdauer bei verminderter Substratdicke oder eine beliebige Kombination beider Werte. Die bevorzugten absoluten Beladungs- und Luftwiderstandswerte ergeben sich aus den auf die Verwendung der erfindungsgemäss hergestellten porösen Körper als Batterieseparatoren gerichteten Patentansprüchen.

Beispiel 1

32 g gefällte Kieselsäure (FK 320 DS, Degussa, Primärteilchengrösse ca. 18 nm) und 368 g Wasser werden 60 Sekunden lang mit einem Ultraturraxgerät behandelt und in eine flache Schale gegossen. Ein vorher zugeschnittenes, ca. 0,6 mm dickes Substrat aus mit Phenolharz imprägniertem und auskondensiertem Zellulosefaservlies, wird auf die Oberfläche der Dispersion gelegt. Das Durchnetzen erfolgt in wenigen Sekunden. Das so präparierte Blatt wird abtropfen gelassen und dann 15 Minuten bei 110°C getrocknet. Etwaige auf der Oberfläche sich dann befindliche Kieselsäureteilchen können abgebürstet werden.

Die so erhaltene Gewichtszunahme betrug 14 g/m². Der Luftwiderstandswert ist dadurch von 15 Sekunden des Substrates auf ca. 170 Sekunden des gefüllten Blattes angestiegen [Messung mit einem «Gurley»-Gerät, Typ 4110, 300 ml Luftdurchsatz, 567 g Gewichtsauflage $\triangleq 1,2 \times 10^3$ Pa (124,2 mm Wassersäule), 6,45 cm² Messfläche].

Durch Verwendung höher oder niedriger konzentrierter Lösungen, anderer Dispergierverfahren bzw. -bedingungen usw., können Luftdurchlässigkeitswerte nach Wunsch hergestellt werden, so dass die Filterwirkung des so gewonnenen Substrates dem Anwendungsfall angepasst werden kann.

Um die Eignung der so erhaltenen Substrate in bezug auf den Einsatz in Bleisäureakkumulatoren zu überprüfen, wurden sowohl das unbehandelte Substrat als auch das gefüllte Substrat in Blei-Calcium-Elemente (4 positive und 5 negative Platten, bei 1,0 mm Plattenabstand) eingebaut und nach DIN 43 539, Lebensdauertest, überprüft. Die Elemente, die mit unerfülltem Substrat separiert worden waren, zeigten nach 94 Zyklen einen deutlichen Abfall ihrer Leistungsfähigkeit und erfüllten nach 117 Zyklen nicht mehr die Anforderungen, während die Elemente mit den gefüllten Substraten erst nach 141 Zyklen ausfielen. Die Beurteilung der Substrate nach dem Test zeigte, dass die ungefüllten Substrate trotz der geringeren Zyklenzahl nach Art und Menge schwerwiegendere Kurzschlüsse durch die ausgefallenen Massen der Platten aufwiesen, während die gefüllten Substrate aufgrund der geringeren Porengrösse Kurzschlüsse verhinderten.

|  | ungefülltes Substrat | gefülltes Substrat |
|---|---|---|
| Kaltstartwerte nach 94 Zyklen | 1,33 V/72 Sek. | 1,48 V/106 Sek. |
| Kaltstartwerte nach 117 Zyklen | ausgefallen | 1,40 V/75 Sek. |
| Kaltstartwerte nach 141 Zyklen | ausgefallen | ausgefallen |

Beispiel 2

45 g gefällte Kieselsäure (FK 320 DS) und 255 g Wasser werden wie in Beispiel 1 behandelt und zur Füllung eines gleichartigen Substrats wie in Beispiel 1 verwendet. Die Gewichtszunahme betrug hier 35 g/m². Der Luftwiderstandswert des Substrates von 11 Sekunden stieg an auf ca. 150 Sekunden.

Die so erhaltenen Separatoren wurden in Blei-Akkumulatorelemente eingebaut, um ihre Lebensdauer zu bestimmen.

Hier wurden nun im Gegensatz zum obigen Beispiel 1 mit 3,5% Antimon legierte Gitter verwendet, um die verschiedenartige Art der Massenhaftung und der Struktur der ausfallenden Masse zu erfassen. Die Elemente wurden aus 4 positiven und 5 negativen Platten aufgebaut, mit 1,0 mm Plattenabstand geschweisst und nach DIN 43539 einem Zyklentest unterworfen. Die Resultate zeigen erneut eine deutliche Leistungssteigerung der Elemente mit gefülltem Substrat:

|  | ungefülltes Substrat | gefülltes Substrat |
|---|---|---|
| Kaltstartwerte nach 118 Zyklen | 1,43 V/131 Sek. | 1,45 V/128 Sek. |
| Kaltstartwerte nach 141 Zyklen | 1,29 V/69 Sek. | 1,39 V/101 Sek. |

|  | ungefülltes Substrat | gefülltes Substrat |
|---|---|---|
| Kaltstartwerte nach 153 Zyklen | ausgefallen | 1,36 V/81 Sek. Versuch abgebrochen |

Die Beurteilung der Separatoren nach dem Versuch zeigte mittlere bis schwere Kurzschlüsse bei den ungefüllten Substraten und keine Kurzschlussbildung bei den gefüllten Substraten.

Beispiel 3

Eine 15 gew.%ige Aufschlämmung von gefällter Kieselsäure (FK 320 DS) in Wasser wurde 30 Sekunden lang mit einem Ultraturraxgerät behandelt und dann wie in Beispiel 1 angegeben weiterverwendet.

Die Gewichtszunahme betrug 65 g/m², der Luftwiderstandswert stieg von 4 Sekunden auf das unbehandelte Substrat auf 220 Sekunden für das gefüllte Substrat an.

Beispiel 4

Eine 5 gew.%ige Aufschlämmung von gefällter Kieselsäure (FK 320 DS) wurde wie in Beispiel 1 angegeben hergestellt. Ein Blatt eines ca. 0,4 mm dicken gesinterten Polyvinylchloridkörpers wurde damit gefüllt. Die Gewichtszunahme betrug 7 g/m²; der Luftwiderstandswert stieg von 20 Sekunden auf 10 Sekunden an. Der so hergestellte poröse Körper eignet sich als Batterieseparator für saure Elektrolyte.

Beispiel 5

Eine 35 gew.%ige Dispersion von Kieselsäure (Aerosil K 342, Degussa, Primärteilchengrösse ca. 30 nm) wurde in Lieferform benutzt, um ein aus einem Gemisch von synthetischen polymeren Fasern (54% Polyethylen, 10% Polyester) und Glasfasern (36%) bestehendes ca. 0,5 mm dickes Substrat zu füllen. Es wurde keine mechanische Aufbereitung der Dispersion angewendet. Alle anderen Bedingungen wie im Beispiel 1.

Die Gewichtszunahme betrug 270 g/m², der Luftwiderstandswert stieg von 5 Sekunden auf ca. 2700 Sekunden an. Der hergestellte poröse Körper eignet sich als Batterieseparator für saure Elektrolyte.

Beispiel 6

Eine 20 gew.%ige Dispersion von gefällter Kieselsärue (VN-2, Degussa, Primärteilchengrösse ca. 28 nm) wurde 10 Minuten lang mit einem Ultraturraxgerät behandelt. Ein Substrat, wie in Beispiel 5 angegeben wurde mit dieser Dispersion gefüllt. Die Gewichtszunahme betrug 130 g/m² und der Luftwiderstandswert stieg von 5 Sekunden auf 410 Sekunden an. Der hergestellte poröse Körper eignet sich als Batterieseparator für saure Elektrolyte.

## Patentansprüche

1. Verfahren zur Herstellung von in den Poren bindemittelfreien, porösen Körpern mit in weiten Grenzen einstellbaren Luftwiderstandswerten als Mass für die Porengrösse aus nach beliebigen Herstellungsverfahren gewonnenen grobporigen Substraten und Füllstoffen, dadurch gekennzeichnet, dass das Substrat mit einer bindemittelfreien Dispersion eines mikronisierten, agglomerationsfähigen Füllstoffes mit einer Teilchengrösse von höchstens $5 \times 10^{-3}$ mm gefüllt und anschliessend das Dispersionsmittel entfernt wird.

2. Verfahren nach Anspruch 1, dadurch gekennzeichnet, dass ein Substrat mit einer Porengrösse von mehr als $10^{-5}$ mm und vorzugsweise mehr als $10^{-3}$ mm verwendet wird.

3. Verfahren nach den Ansprüchen 1 bis 2, dadurch gekennzeichnet, dass in Wasser dispergierbare Füllstoffe verwendet werden.

4. Verfahren nach den Ansprüchen 1 bis 3, dadurch gekennzeichnet, dass als Füllstoff Calciumcarbonate, Kaoline, Siliciumdioxide, Talkum und/oder Diatomeenerde verwendet werden.

5. Verfahren nach den Ansprüchen 1 bis 4, dadurch gekennzeichnet, dass mikronisierte Füllstoffe mit einer Teilchengrösse von $10^{-6}$ bis $10^{-3}$ mm, vorzugsweise $10^{-5}$ bis $10^{-4}$ mm verwendet werden.

6. Verfahren nach den Ansprüchen 1 bis 5, dadurch gekennzeichnet, dass das Substrat bezogen auf eine Substratstärke von 0,1 mm mit 0,1 bis 100 g/m² , vorzugsweise 1 bis 60 g/m² Füllstoff beladen wird.

7. Verfahren nach den Ansprüchen 1 bis 6, dadurch gekennzeichnet, dass das Substrat mit einer solchen Menge Füllstoff beladen wird, dass sich der Luftwiderstandswert des Substrats um den Faktor 1 bis 1000, vorzugsweise 1 bis 600 und insbesondere 1 bis 200 erhöht.

8. Verwendung der nach dem Verfahren gemäss den Ansprüchen 1 bis 7 hergestellten porösen Körper als Batterieseparatoren für alkalische oder saure Elektrolyte.

9. Verwendung nach Anspruch 8 als Batterieseparatoren für saure Elektrolyte, dadurch gekennzeichnet, dass das Substrat ein mit Phenolharz imprägniertes Cellulosefaserwirrvlies ist, das Substrat mit 1 bis 20 g/m² und vorzugsweise 5 bis 50 g/m² Füllstoff beladen ist und das mit Füllstoff beladene Substrat Luftwiderstandswerte von 10 bis 2000 Sekunden und vorzugsweise 20 bis 1000 Sekunden aufweist.

10. Verwendung nach Anspruch 8 als Batterieseparatoren für saure Elektrolyte, dadurch gekennzeichnet, dass das Substrat ein gesinterter Polyvinylchloridkörper ist, das Substrat mit 1 bis 200 g/m² und vorzugsweis 2 bis 50 g/m² Füllstoff beladen ist und das mit Füllstoff beladene Substrat Luftwiderstandswerte von 10 bis 200 Sekunden und vorzugsweise 20 bis 1000 Sekunden aufweist.

11. Verwendung nach Anspruch 8 als Batterieseparatoren für saure Elektrolyte, dadurch gekennzeichnet, dass das Substrat aus synthetischen Fasern oder aus Gemischen von natürlichen und synthetischen Fasern besteht, das Substrat mit 1 bis 500 g/m² und vorzugsweise 5 bis 200 g/m² beladen ist und das mit Füllstoff beladene Substrat Luftwiderstandswerte von 10 bis 5000 Sekunden und vorzugsweise 20 bis 1000 Sekunden aufweist.

12. Verwendung der nach dem Verfahren gemäss den Ansprüchen 1 bis 7 hergestellten porösen Körper als Filtermatten oder -filze.

## Claims

1. Process for the production of porous bodies containing no binder in the pores with air resistant values, variable within wide limits, as a measure for the pore size from coarse-pored substrates obtained by any production process and fillers, characterized in that the substrate is filled with a binder-free dispersion of a micronized agglomeratable filler having a particle size of not more than $5 \times 10^{-3}$ mm and subsequently the dispersion medium is removed.

2. Process according to claim 1, characterized in that a substrate with a pore size above $10^{-5}$ mm and preferably above $10^{-3}$ mm is used.

3. Process according to claims 1 to 2, characterized in that water dispersible fillers are used.

4. Process according to claims 1 to 3, characterized in that calcium carbonates, kaolins, silicas, talc and/or diatomaceous earth are used as filler.

5. Process according to claims 1 to 4, characterized in that micronized fillers with a particle size of $10^{-6}$ to $10^{-3}$ mm, preferably $10^{-5}$ to $10^{-4}$ mm are used.

6. Process according to claims 1 to 5, characterized in that based on a substrate thickness of 0.1 mm the substrate is charged with 0.1 to 100 g/m², preferably 1 to 60 g/m² of filler.

7. Process according to claims 1 to 6, characterized in that the substrate is charged with such a filler quantity that the substrate air resistance value is increasd by the factor 1 to 1000, preferably 1 to 600 and more particularly 1 to 200.

8. Use of the porous bodies produced according to the process of claims 1 to 8 as battery separators for alkaline or acid electrolytes.

9. Use according to claim 9 as battery separators for acid electrolytes, characterized in that the substrate is a phenolic resin-impregnated cellulose fibre tangled fleece, the substrate is charged with 1 to 200 g/m² and preferably 5 to 50 g/m² of filler and the filler-charged substrate has air resistance values of 10 to 2000 seconds and preferably 20 to 1000 seconds.

10. Use according to claim 8 as battery separators for acid electrolytes, characterized in that the substrate is a sintered polyvinylchloride body, the substrate is charged with 1 to 200 g/m² and preferably 2 to 50 g/m² of filler and the filler-charged substrate has air resistance values of 10 to 2000 seconds and preferably 20 to 1000 seconds.

11. Use according to claim 8 as battery separators for acid electrolytes, characterized in that the substrate consists of synthetic fibres or mixtures of synthetic and natural fibres, the substrate is charged with 1 to 500 g/m² and preferably 5 to 200 g/m² and the filler-charged substrate has air resistance values of 10 to 5000 seconds and preferably 20 to 1000 seconds.

12. Use of the porous bodies produced according to the process of claims 1 to 7 as filter mats or felts.

## Revendications

1. Procédé de production de corps poreux exempts de liant dans les pores, avec des valeurs de résistance à l'air réglables dans de larges limites comme mesure pour la dimension de pores de substrat et de charge, à grosses pores obtenus par un procédé de production adapté, caractérisé en ce que le substrat est chargé avec une dispersion exempte de liant d'une charge capable d'agglomération, micronisée avec une dimension de particule d'au plus $5 \times 10^{-3}$ mm et ensuite le milieu de dispersion est enlevé.

2. Procédé selon la revendication 1, caractérisé en ce qu'on utilise un substrat avec une dimension de pores de plus de $10^{-5}$ mm et de préférence de plus de $10^{-3}$ mm.

3. Procédé selon les revendications 1 et 2, caractérisé en ce qu'on utilise des charges dispersibles dans l'eau.

4. Procédé selon l'une des revendications 1 à 3, caractérisé en ce qu'on utilise comme charge du carbonate de calcium, du kaolin, du dioxyde de silicium, du talc et/ou des terres de Diatomée.

5. Procédé selon l'une des revendications 1 à 4, caractérisé en ce qu'on utilise des charges micronisées avec une dimension de particule de $10^{-6}$ à $10^{-3}$ mm, de préférence de $10^{-5}$ à $10^{-4}$ mm.

6. Procédé selon l'une des revendications 1 à 5, caractérisé en ce que le substrat amené ou rapporté à une épaisseur de substrat de 0,1 mm est chargé avec 0,1 à 100 g/m², de préférence 1 à 60 g/m², de charge.

7. Procédé selon l'une des revendications 1 à 6, caractérisé en ce que le substrat est chargé avec une telle quantité de charge que la valeur de résistance à l'air du substrat s'élève d'un facteur de 1 à 1000, de préférence de 1 à 600 et encore de préférence de 1 à 200.

8. Utilisation des corps poreux produits par le procédé selon l'une des revendications 1 à 7 comme séparateurs de batteries à électrolyte alcalin ou acide.

9. Utilisation selon la revendication 8 comme séparateurs de batteries à électrolyte acide, caractérisée en ce que le substrat est une étoffe non tissée de fibre de cellulose imprégnée de résine phénolique, le substrat est chargé avec 1 à 200 g/m² et de préférence 5 à 50 g/m² de charge et le substrat chargé avec la charge présente des valeurs de résistance à l'air de 10 à 2000 secondes et de préférence de 20 à 1000 secondes.

10. Utilisation selon la revendication 8 comme séparateurs de batteries à électrolyte acide, caractérisée en ce que le substrat est un corps en chlorure de polyvinyle fritté, le substrat est chargé avec 1 à 200 g/m² et de préférence 2 à 50 g/m² de charge et le substrat chargé avec la charge présente des valeurs de résistance à l'air de 10 à 2000 secondes et de préférence de 20 à 1000 secondes.

11. Utilisation selon la revendication 8 comme séparateurs de batteries à électrolyte acide, caractérisé en ce que le substrat se compose de fibre synthétique ou de mélanges de fibre naturelle et synthétique, le substrat est chargé avec 1 à 500 g/m² de préférence 5 à 200 g/m² et le substrat chargé avec la charge présente des valeurs de résistance à l'air de 10 à 5000 secondes et de préférence de 20 à 1000 secondes.

12. Utilisation des corps poreux produits par le procédé selon l'une des revendications 1 à 7 comme étoffe ou nappe ou feutre de filtre.